Europäisches Patentamt

European Patent Office

Office européen des brevets

(19)

(11) Veröffentlichungsnummer : **0 106 934
B1**

(12) **EUROPÄISCHE PATENTSCHRIFT**

(45) Veröffentlichungstag der Patentschrift :
02.01.86

(51) Int. Cl.⁴ : **C 01 B   7/14**

(21) Anmeldenummer : **83102108.4**

(22) Anmeldetag : **04.03.83**

(54) **Verfahren zur Rückgewinnung von Jod aus organisch gebundenes Jod enthaltenden Mutterlaugen und Abwässern.**

(30) Priorität : **09.08.82 IT 2278682**

(43) Veröffentlichungstag der Anmeldung :
**02.05.84 Patentblatt 84/18**

(45) Bekanntmachung des Hinweises auf die Patenterteilung : **02.01.86 Patentblatt 86/01**

(84) Benannte Vertragsstaaten :
**AT DE FR GB**

(56) Entgegenhaltungen :
**DE-A- 1 618 296
DE-C-   375 656
US-A- 3 119 881**

(73) Patentinhaber : **BRACCO INDUSTRIA CHIMICA
Società per Azioni
Via E. Folli, 50
I-20134 Milano (IT)**

(72) Erfinder : **Felder, Ernst, Prof.Dr.
Via Ceresio 49
CH-6826 Riva S.Vitale (CH)**
Erfinder : **Bianchi, Sergio, Dr.
Viale E.Caldara 11
I-20122 Milano (IT)**

(74) Vertreter : **Zutter, Hans Johann Niklaus
EPROVA AG Forschungsinstitut Im Laternenacker 5
CH-8200 Schaffhausen (CH)**

**Beschreibung**

Die Erfindung betrifft die Rückgewinnung von Jod aus Mutterlaugen und Abwässern, die Verbindungen mit organisch gebundenem Jod enthalten. Nach dem erfindungsgemässen Verfahren kann das Jod auch aus solchen Verbindungen rückgewonnen werden, die aromatisch gebundenes Jod enthalten. Derartige Mutterlaugen und Abwässer fallen z. B. bei der Herstellung von jod-haltigen Röntgenkontrastmitteln in grossen Mengen an.

Moderne Röntgenkontrastmittel sind gewöhnlich komplizierte Derivate von 2,4,6-Trijod-benzoesäure, 2,4,6-Trijod-1,3-benzendicarbonsäure, 2,3,5,6-Tetrajod-1,4-benzendicarbonsäure, 2,4,6-Trijod-anilin und 2,4,6-Trijod-phenol. Gemeinsames Merkmal ist die feste Bindung der Jodatome an den aromatischen Kern. Die Festigkeit der Bindung hängt aber auch stark von der Struktur der betreffenden Verbindung ab.

Aus Gründen des Umweltschutzes ist es notwendig, die Abwässer vollständig von organischen Jodverbindungen zu befreien. Aus wirtschaftlichen Gründen soll das teure und selten gewordene Jod weitestgehend zurückgewonnen werden. Damit stehen die Erfordernisse des Umweltschutzes und der Wirtschaftlichkeit im Einklang miteinander.

Bisher ist es nicht gelungen, aromatisch gebundenes Jod enthaltende wässerige Lösungen etwa von Röntgenkontrastmitteln in wirtschaftlich tragbarer Weise zu mineralisieren, das heisst beispielsweise durch Erhitzen in alkalischer Lösung in Jodid-Lösung überzuführen. Bekannt ist dagegen die reduktive Mineralisierung durch katalytische Hydrierung (E. Felder et al., Il Farmaco Ed. Sc. *21* (7), Seite 506-510), durch Reduktion mit Zink (G. Goulette et al., Comptes Rendus de l'Académie des Sciences, *281*, Série C, Seite 543-546 (1975)) oder durch katalysierte Reduktion mit Natriumborhydrid (R. A. Egli, Zeitschrift für Analytische Chemie *247*, Seite 39-41 (1969)). Diese Methoden dienen rein wissenschaftlichen Zwecken. Sie sind für eine Jod-Rückgewinnung bei weitem zu teuer.

Die Mineralisierung von aromatisch gebundenem Jod in wässeriger Phase ist nach wie vor ein Anliegen der Fachwelt.

In der deutschen Patentschrift 375 656 ist ein Verfahren zur Freisetzung von nur physikalisch, nämlich adsorptiv an Kohle gebundenem Jod durch Erhitzen mit Eisen oder andern Metallen wie z. B. Zink, Aluminium, Kupfer usw. beschrieben. Dieses Verfahren vermittelt keine Lehre für die erfindungsgemässe Mineralisierung von aromatisch gebundenem Jod in wässriger Phase.

In der amerikanischen Patentschrift 3 119 881 ist ein Dehydrierungsverfahren mit Jod beschrieben. Dabei wird elementares Kupfer zur Bindung von Jod aus Jodwasserstoff, elementarem Jod oder aus organischen Jodiden verwendet. In allen Fällen handelt es sich um die Abspaltung von Jod aus lockerer höchstens aliphatischer Bindung. Zudem wird die Reaktion bei hohen Temperaturen von 250 bis über 500 °C in heterogener Gasphase durchgeführt. Die Mineralisierung von fest an aromatische Kerne gebundenem Jod in wässriger Phase mit Kupferionen als Katalyt ist nicht beschrieben oder nahegelegt worden.

In der deutschen Offenlegungsschrift 1 618 296 wird auf Seite 2 Absatz 2 ausdrücklich bestätigt, dass das in der amerikanischen Patentschrift 3 119 881 beschriebene Verfahren zur Entfernung von Jod aus organischen Verbindungen nicht geeignet ist. Gemäss dem Verfahren der genannten Offenlegungsschrift wird Jod aus organischen Stoffen durch Behandlung mit metallischem Aluminium, Zink oder Magnesium unter Bildung entsprechender Metalliodide entfernt. Dieses Verfahren beruht auf einer reduktiven Dehalogenierung. Es ist offensichtlich grundsätzlich verschieden von der durch Kupferionen katalysierten Mineralisierung von aromatisch gebundenem Jod.

Es wurde nun gefunden, dass sich in wässerigen Mutterlaugen und Abwässern enthaltenes, organisch gebundenes Jod vollständig mineralisieren lässt, wenn man diese Lösungen in Gegenwart von katalytischen Mengen von Kupfersalzen oder feinverteiltem metallischem Kupfer mit überschüssigen Mengen von starken Alkalien erhitzt. Kupfersalze und metallisches Kupfer sind spezifische Katalysatoren zur Abspaltung und Mineralisierung auch von aromatisch gebundenem Jod.

Die katalytische Wirkung von Kupferionen wird durch die Beobachtung unterstrichen, dass nach Zusatz von Kupferionen bindenden Komplexbildnern wie beispielsweise EDTA (Ethylendiamintetraessigsäure), die sonst nahezu vollständige Mineralisation von Jod vollständig verhindert wird.

Im allgemeinen ist die erforderliche Katalysatormenge gering. Höhere Kupferkonzentrationen sind auch möglich, verbieten sich aber aus Gründen der Wirtschaftlichkeit und des Umweltschutzes. Die untere Grenze ist im allgemeinen nicht kritisch und ist ohne Schwierigkeiten durch den Fachmann anhand von Routineversuchen für das jeweils zu lösende Problem zu ermitteln. Zufriedenstellende Ergebnisse werden normalerweise bei Konzentrationen von 100 bis 3 000 ppm Kupferionen, bezogen auf die zu mineralisierende organische Jodverbindung, erhalten. Für den Regelfall liegen die minimal erforderlichen Katalysatorkonzentrationen, bezogen auf Jodverbindung, zwischen 25 und 250 ppm Kupferionen. Für die Mineralisation von besonders stabilen Jodverbindungen können jedoch bis um eine Potenz höhere Kupferionen-Konzentrationen zweckmässig sein. Aehnlich hohe Konzentrationen sind erforderlich, wenn man Kupferionen durch fein verteiltes metallisches Kupfer ersetzt.

Es ist ausserdem die Gegenwart ausreichender Mengen von Alkali für die Mineralisation erforderlich. Dieses wird in Form wässerig-alkalischer Lösungen zur Verfügung gestellt, die einen pH-Wert der Lösung

# 0 106 934

von mindestens 11 ergeben und die normalerweise in mindestens ~ 20 %iger Lösung eingesetzt werden. Neben den Alkalihydroxidlösungen wie Natron- und Kalilauge können auch andere, ähnlich wirtschaftliche Laugen wie beispielsweise Alkalicarbonate eingesetzt werden. Das Verhältnis von Alkali zu Jodverbindung ist nicht kritisch, es muss lediglich dafür gesorgt sein, dass während der Mineralisation ein pH-Wert von mindestens 11 eingestellt ist. Der Fachmann kann die optimalen Bedingungen ohne grossen Aufwand ermitteln. Normalerweise wird ein Ueberschuss von mindestens 2 Mol Alkali pro Grammatom organisch gebundenem Jod verwendet, der jedoch auch auf 10 Mol gesteigert werden kann.

In der Regel genügt 1-stündiges Rückflusskochen, um vollständige Mineralisation des Jods zu erreichen ; gelegentlich können auch längere Reaktionszeiten von Vorteil sein, aber auch Reaktionszeiten von nur 10 Minuten ergeben zuweilen zufriedenstellende Ergebnisse.

Die am zweckmässigsten anzuwendenden Temperaturen können ebenfalls durch Routineversuche für jede Reaktion bestimmt werden. Sie liegen in der Regel zwischen etwa 100 und 150 °C.

Die Anwendung von 0,1 Gew.% $CuSO_4 \cdot 5H_2O$ bzw. 250 ppm Kupferionen, bezogen auf die Jodverbindung, und etwa 1-stündiges Rückflusskochen in wässerigem Alkalihydroxid genügt um das Jod in den meisten organischen jodhaltigen Röntgenkontrastmitteln vollständig zu mineralisieren. Zu diesen Röntgenkontrastmitteln gehören neben Jodamid beispielsweise :

Azetrizoesäure : 3-Acetylamino-2,4,6-trijod-benzoesäure
Diatrizoesäure : 3,5-Bis-acetylamino-2,4,6-trijod-benzoesäure
Adipiodon : 3,3'-[(1,6-Dioxo-1,6-hexandiyl)diimino]-bis-2,4,6-trijod-benzoesäure
Iodoxamsäure : 3,3'-[(1,16-Dioxo-4,7,10,13-tetraoxahexadecan-1,16-diyl)diimino]-bis [2,4,6-trijod-benzoesäure].

Bei einigen weiteren Röntgenkontrastmitteln, zu denen insbesondere die Derivate von 2,4,6-Trijod-1,3-benzendicarbonsäure gehören, ist das Jod so fest gebunden, dass unter verschärften Bedingungen gearbeitet werden muss. Diese lassen sich jedoch erfindungsgemäss auch noch ohne besonderen Aufwand leicht realisieren.

Zu diesen besonders stabilen Röntgenkontrastmitteln gehören beispielsweise :

Iothalamsäure : 3-(Acetylamino)-2,4,6-trijod-5-[(methylamino)carbonyl]-benzoesäure
Iopamidol : (S)-N,N'-Bis [2-hydroxy-1-(hydroxymethyl)ethyl]-2,4,6-trijod-5-[(2-hydroxy-1-oxopropyl)amino]-1,3-benzendicarboxamid
Iopronsäure : 2-[[2-[3-(Acetylamino)-2,4,6-trijod-phenoxy]ethoxy]methyl]butansäure
Iodopanoesäure : 3-Amino-α-ethyl-2,4,6-trijodbenzenpropansäure.

Als stabilste Jodverbindung erwies sich das neue, nichtionische, wasserlösliche Röntgenkontrastmittel Iopamidol.

Tabelle

Einfluss des Röntgenkontrastmittels auf die Mineralisationsbedingungen.

| Röntgenkontrast- mittel 2 %ige Lösung | Mineralisationsgrad in % der Theorie nach 1-stündigem Erhitzen in 9 Mol NaOH pro Mol Jodverbindung in Gegenwart von: | | | | |
|---|---|---|---|---|---|
| | 0,1 % $CuSO_4 \cdot 5H_2O$ (250 ppm Cu++) | | 1 % $CuSO_4 \cdot 5H_2O$ (2500 ppm Cu++) | | |
| | 100°C* | 130°C | 100°C* | 130°C | 150°C |
| Jodamid | 98,5 | | | | |
| Acetrizoesäure | 102,3 | | | | |
| Diatrizoesäure | 98,3 | | | | |
| Adipiodon | 98 | | | | |
| Iodoxamsäure | 95,8 | | | | |
| Metrizamid | 68,4 | 101,4 | 102,3 | | 102,9 |
| Iothalamsäure | 48,3 | 101,5 | | | |
| Iopronsäure | 4 | 100,2 | 5 | 101,2 | |
| Iodopanoesäure | 0 | 0 | 47,7 | 101,2 | |
| Iopamidol | 0 | | 0 | 61,1 | 100 |
| *Rückflusskochen | | | | | |

3

Aus den vorstehenden Daten ergeben sich die Standard-Bedingungen für die Mineralisierung von aromatisch gebundenem Jod, welche in etwa dadurch gekennzeichnet sind, dass man die wässerigen Lösungen der entsprechenden Jodverbindungen in überschüssigem Alkalihydroxid in Gegenwart von etwa 100 bis 2 500 ppm Kupferionen oder Kupfermetall während 1/2 bis 2 Stunden auf 100 bis 150 °C erhitzt. Je nach Problemstellung kann man natürlich auch länger und/oder höher erhitzen oder grössere Mengen von Katalysator einsetzen.

Die Rückgewinnung von Jod nach der Mineralisierung erfolgt nach bekannten Methoden, im Prinzip durch Oxydation des gebildeten Jodids mit relativ milden Oxydationsmitteln wie Chlor, Hypochlorit, salpetriger Säure, Wasserstoffperoxid, $MnO_2$ oder elektrochemische Oxydation.

Das gebildete Jod wird z. B. durch Extraktion oder Sublimation im Luft- oder Dampfstrom isoliert bzw. konzentriert.

Das Jod kann auch aus einem organischen Extraktionsmittel (z. B. Toluol) durch Behandlung mit wässerigem Alkalihydroxid herausgelöst werden, und die Joddämpfe bei der Sublimation können durch Einleiten in Alkalihydroxid-Lösungen aufgefangen und absorbiert werden. Durch Ansäuern wird das Jod aus der Alkalihydroxid-Lösung bekanntlich quantitativ regeneriert.

Das Verfahren zur Rückgewinnung von Jod aus Verbindungen mit organisch, insbesondere aromatisch, gebundenem Jod enthaltenden Mutterlaugen und Abwässern ist demnach vielfältig anwendbar und insbesondere wertvoll im Hinblick auf verbesserten Umweltschutz.

## Beispiel 1

Eine neutralisierte wässerige Mutterlauge, die 20,9 kg Jodamid (33 Mol) enthält, wird mit 40 kg 30 %iger Natronlauge und 20 g Kupfersulfat. Pentahydrat versetzt und während 1 Stunde am Rückfluss gekocht.

Der Mineralisationsgrad, argentometrisch bestimmt, beträgt 99 bis 100 % der Theorie.

Die braune Reaktionslösung wird mit 25 kg 50 %iger Schwefelsäure angesäuert, durch Filtration mit Aktivkohle von einer Ausfällung befreit und durch vorsichtiges Erhitzen von Chlorgas oxydiert, wobei der Oxydationsverlauf potentiometrisch verfolgt wird.

Nach beendeter Oxydation wird das Jod mit Toluol (50 l) extrahiert.

Die abgetrennte Toluolphase wird mit 20 %iger Natronlauge intensiv durchgerührt, wobei das Jod $(3J_2)$ in $NaJO_3 + 5NaJ$ verwandelt und damit in die wässerige Phase übergeführt wird.

Durch Ansäuern wird das Jod freigesetzt und mit Wasserdampf sublimiert.

Ausbeute : 10,81 kg Jod, das sind 86 % der Theorie.

## Beispiel 2

Eine wässrige Mutterlauge, welche 61,4 kg Iothalamsäure (100 Mol) enthält, wird mit 120 kg 30 %iger Natronlauge (900 Mol) und 60 g Kupfersulfat.Pentahydrat versetzt und im geschlossenen Gefäss während 1 Stunde auf 130 °C erhitzt.

Der Mineralisationsgrad beträgt 100,5 % der Theorie.

Die Reaktionslösung wird mit Schwefelsäure angesäuert, mit Aktivkohle versetzt, durchgerührt und filtriert. Das Filtrat wird auf etwa 60 °C erwärmt und eine Gasmischung aus Luft und Chlor wird ein- und durchgeleitet. Das freigesetzte Jod wird mit dem Luftstrom abgetrieben und in 20 %ige wässrige Natronlauge eingeleitet und dabei in $NaJO_3 + 5NaJ$ umgewandelt.

Durch Ansäuern wird Jod freigesetzt.

Zur weiteren Reinigung wird das Jod mit Wasserdampf sublimiert.

Ausbeute : 33 kg Jod, das sind 86,6 % der Theorie.

## Beispiel 3

Eine Mutterlauge, welche 100 kg Iopamidol (128,7 Mol) enthält, wird mit 155 kg 30 %iger Natronlauge und 710 g Kupfersulfat.Monohydrat versetzt und im geschlossenen Gefäss 1 Stunde auf 150 °C erhitzt.

Der Mineralisationsgrad beträgt 98,8 % der Theorie.

Die Reaktionslösung wird mit Schwefelsäure angesäuert, mit Aktivkohle versetzt und filtriert.

Das Filtrat wird mit Braunstein ($MnO_2$) versetzt. Das freigesetzte Jod wird mit Wasserdampf abgetrieben und aufgefangen.

Ausbeute : 41,7 kg Jod, das sind 85 % der Theorie.

## Beispiel 4

Eine 80 kg Iodoxamsäure (62,11 Mol) enthaltende Mutterlauge wird mit 120 kg 30 %iger Natronlauge (900 Mol) und 800 g Kupfernitrat $Cu(NO_3)_2 \cdot 3H_2O$, $M_r$ 241.6 versetzt und 1 1/2 Stunden am Rückfluss gekocht.

Der Mineralisationsgrad beträgt 98 % der Theorie.

Die Reaktionslösung wird mit Schwefelsäure angesäuert, mit Kohle und Filterhilfsmittel (Celit)

4

versetzt, filtriert und mit der berechneten Menge Braunstein verrührt. Das freigesetzte Jod wird mit Wasserdampf abgetrieben und aufgefangen.

Ausbeute : 42,6 kg Jod, das sind 90 % der Theorie.

## Beispiel 5

Eine 122,8 kg Diatrizoesäure (200 Mol) enthaltende Mutterlauge wird mit 240 kg 30 %iger Natronlauge (1 800 Mol) und 48 g Kupferchlorid (250 ppm Cu$^+$) versetzt und eine Stunde am Rückfluss gekocht.

Der Mineralisationsgrad beträgt 98 % der Theorie. Die Reaktionslösung wird mit Schwefelsäure stark angesäuert, filtriert und mit 25 kg Braunstein versetzt. Das freigesetzte Jod wird mit Wasserdampf abgetrieben und aufgefangen.

Menge : 67 kg Jod, das sind 88 % der Theorie.

## Beispiel 6

Eine 80 g Metrizamid (2-[[3-Acetylamino)-5-(acetylmethylamino)-2,4,6-trijod-benzoyl]-amino]-2-deoxy-D-glucose) (0,1 Mol) enthaltende Mutterlauge wird mit 120 g 30 %iger Natronlauge (0,9 Mol) und 43 mg Kupfersulfat Monohydrat (Mr 177,65) versetzt und im Druckgefäss während einer Stunde auf 130 °C erhitzt.

Der Mineralisationsgrad beträgt ~ 101 % der Theorie. Die Reaktionslösung wird mit Schwefelsäure angesäuert, filtriert und mit Chlorgas oxydiert. Das freigesetzte Jod wird mit Toluol extrahiert und analog Beispiel 1 isoliert.

Ausbeute : 34,23 g Jod, das sind 89 % der Theorie.

## Beispiel 7

12,6 kg Jodamid (10 Mol) in 38 l 5 N Natronlauge und 30 l Wasser werden mit 1 Liter CuCl-Lösung (5 g CuCl gelöst in 1 Liter 20 % Salzsäure) versetzt und während einer Stunde am Rückflusskühler gekocht. Der Ansatz wird, wie im Beispiel 1 beschrieben, aufgearbeitet.

Man erhält 6,7 kg Jod, das sind 88 % der Theorie.

## Beispiele 8 bis 26

Analog den Beispielen 1-7 kann man das organisch gebundene Jod aus Mutterlaugen und Abwässern folgender Verbindungen zurückgewinnen :

8. 2,3,5,6-Tetrajod-1,4-benzendicarbonsäure-bis-2-hydroxyethylester
9. 3-Acetylamino-2,4,6-trijod-benzoesäure
10. 3,5-Bis-acetylamino-2,4,6-trijod-benzoesäure
11. 3,3'-[(1,6-Dioxo-1,6-hexandiyl)diimino]-bis [2,4,6-trijod-benzoesäure]
12. 3,3'-[(1,4-Dioxo-3,6,9,12-tetraoxatetradecan-1,14-diyl)diimino]bis[2,4,6-trijod-benzoesäure] (= Acidum iotetricum)
13. 3,3'-[Oxybis[(1-oxo-2,1-ethandiyl)imino]]bis[2,4,6-trijod-benzoesäure] (Acidum ioglycamicum)
14. 2-[[2-[3-(Acetylamino)-2,4,6-trijodphenoxy]ethoxy]methyl]butansäure
15. 3-Amino-α-ethyl-2,4,6-trijodbenzenpropansäure
16. 3-(Acetylamino)-5-(acetylmethylamino)-2,4,6-trijodbenzoesäure (= Metrizoesäure)
17. 3-[[[3-(Acetylmethylamino)-2,4,6-trijod-5-[(methylamino)carbonyl]benzoyl]amino]acetyl]-amino]-5-[[(2-hydroxyethyl)amino]carbonyl]-2,4,6-trijodbenzoesäure (= Acidum ioxaglicum)
18. 3,3'-[(1,6-Dioxo-1,6-hexandiyl)diimino]bis-[2,4,6-trijod-5-[(methylamino)carbonyl]benzoesäure] (= Acidum jocarmicum)
19. 3,3'-[(1,10-Dioxo-1,10-decandiyl)diimino]bis[2,4,6-trijod-5-[(methylamino)carbonyl]benzoesäure] (= Acidum josefamicum)
20. 4-[Ethyl[2,4,6-trijod-3-(methyl-amino)phenyl]amino]-4-oxobutansäure (= Acidum iosumeticum)
21. 3-[[[1-(Hydroxymethyl)-2-(methylamino)-2-oxoethyl]amino]carbonyl]-2,4,6-trijod-5-[(methoxyacetyl)amino]benzoesäure (= Acidum iosericum)
22. 5-[Acetyl(2,3-dihydroxypropyl)amino]-N,N'-bis(2,3-dihydroxypropyl)-2,4,6-trijod-1,3-benzendicarboxamid (= Iohexol)
23. 3-(Acetylamino)-5-[[(2-hydroxyethyl)amino]carbonyl]-2,4,6-trijod-benzoesäure (= Acidum joxitalamicum)
24. 3-(Acetylamino)-5-[(hydroxyacetyl)amino]-2,4,6-trijod-benzoesäure (= Acidum ioxotrizoicum)
25. 3-[Acetyl(3-amino-2,4,6-trijodphenyl)amino]-2-methylpropansäure (= Jocetaminsäure)
26. N-(3-Amino-2,4,6-trijod-benzoyl)-N-phenyl-β-analin (= Jobenzamsäure).

## Beispiel 27

a. 12,6 g Jodamid (20 Millimol) in 36 ml 10 N Natronlauge werden mit 3 mg feinstem Kupfermetall-Pulver (~ 250 ppm) versetzt und unter Rühren 1 Stunde am Rückfluss gerührt.

Eine Titration weist nach, dass 89,9 % der theoretisch möglichen Menge Jodid freigesetzt wurde.

b. 12,6 kg Jodamid (20 Mol) in 36 l 10 N Natronlauge werden mit 31 g feinstem Kupfermetall-Pulver (~ 2 500 ppm) verrührt und 1 Stunde unter Rückflusskochen gerührt. Ein aliquoter Teil wird nun titriert. 101 % der theoretisch möglichen Menge Jodid ist freigesetzt worden. Der gesamte Ansatz wird nach der im Beispiel 2 beschriebenen Weise aufgearbeitet.

Ausbeute : 6,63 kg Jod, das sind 87 % der Theorie.

## Beispiele 28 bis 54

In allen vorstehenden Beispielen 1 bis 27 lässt sich die Natronlauge durch die äquivalente Menge Kalilauge (Kaliumhydroxid) ersetzen.

Die Ausbeuten an zurückgewonnenem Jod sind, bei Berücksichtigung experimenteller Fehlergrenzen, dieselben wie bei Verwendung von Natronlauge.

## Beispiel 55

Eine neutralisierte wässrige Mutterlauge, die 41,8 kg Jodamid (66 Mol) enthält, wird mit 31,8 kg Natriumcarbonat und 0,4 kg Kupfersulfat.Pentahydrat versetzt und während 1 Stunde auf 130 Grad Celsius erhitzt.

Der Mineralisationsgrad beträgt 100 % der Theorie.

Die Reaktionslösung wird, wie im Beispiel 1 beschrieben, aufgearbeitet.

Ausbeute : 21,5 kg Jod, das sind 85,6 % der Theorie.

## Beispiele 56 bis 62

In den vorstehenden Beispielen 1 bis 5 und 7 lässt sich die Natronlauge durch die äquivalente Menge Soda oder Pottasche ersetzen. Wenn gleichzeitig die Katalysatormenge auf 2 500 ppm $Cu^{++}/Cu^{+}$ oder Cu, bezogen auf die vorhandene Jodverbindung, erhöht wird und die Mineralisation durch 1-stündiges erhitzen auf 130 Grad Celsius vollzogen wird, so lässt sich dieselbe Menge Jod zurückgewinnen wie in den vorgenannten Beispielen 1 bis 5 und 7.

### Patentansprüche

1. Verfahren zur Rückgewinnung von Jod aus Mutterlaugen oder Abwässern, die organische Jodverbindungen enthalten, durch Mineralisierung des organisch gebundenen Jods und anschliessende Ueberführung des gebildeten Jodids in elementares Jod, dadurch gekennzeichnet, dass man die Mutterlaugen bzw. Abwässer in Gegenwart von 100 bis 3 000 ppm Kupferionen oder von feinverteiltem metallischen Kupfer in wässerig-alkalischer Lösung bei einem pH von mindestens 11 erhitzt.

2. Verfahren nach Anspruch 1, dadurch gekennzeichnet, dass man Mutterlaugen oder Abwässer einsetzt, die jod-haltige Röntgenkontrastmittel enthalten.

### Claims

1. Process for recovering iodine from mother liquor or waste water containing organic iodine compounds, by mineralisation of the organically combined iodine and then converting the iodide formed into elementary iodine, characterised in that the mother liquors or waste waters are heated in the presence of 100 to 3 000 ppm copper ions or of finely divided metallic copper in aqueous-alkaline solution with a pH of at least 11.

2. Process according to claim 1, characterised in that mother liquors or waste waters are used which contain iodine-containing X-ray contrast media.

### Revendications

1. Procédé pour récupérer l'iode contenu dans des eaux mères ou des eaux résiduaires à l'état de composés organiques iodés par minéralisation de l'iode organique et conversion subséquente de l'iodure formé en iode élémentaire, caractérisé en ce que l'on chauffe les eaux mères ou les eaux résiduaires en présence de 100 à 3 000 ppm d'ions cuivre ou de cuivre métallique à l'état de fine division en solution aqueuse alcaline à un pH d'au moins 11.

2. Procédé selon la revendication 1, caractérisé en ce que l'on traite les eaux mères ou eaux résiduaires contenant des agents de contraste iodés aux rayons X.